(19) Europäisches Patentamt
European Patent Office
Office européen des brevets

(11) Veröffentlichungsnummer: **0 221 302 B1**

(12) **EUROPÄISCHE PATENTSCHRIFT**

(45) Veröffentlichungstag der Patentschrift: **18.10.89**

(51) Int. Cl.⁴: **C 08 G 63/60**

(21) Anmeldenummer: **86112751.2**

(22) Anmeldetag: **16.09.86**

(54) **Thermotrope vollaromatische Polyester mit ausgezeichneter Steifigkeit und Zähigkeit, Verfahren zu ihrer Herstellung und ihre Verwendung zur Herstellung von Formkörpern, Filamenten, Fasern und Folien.**

(30) Priorität: **28.09.85 DE 3534730**

(43) Veröffentlichungstag der Anmeldung: **13.05.87 Patentblatt 87/20**

(45) Bekanntmachung des Hinweises auf die Patenterteilung: **18.10.89 Patentblatt 89/42**

(84) Benannte Vertragsstaaten: **DE FR GB IT**

(56) Entgegenhaltungen:
**EP-A- 0 170 935**
**GB-A- 2 058 102**
**US-A- 4 500 699**

**CHEMICAL ABSTRACTS, BAND 102, Nr. 4, 28. Januar 1985, Seite 83, Nr. 26236f, Columbus, Ohio, US; & JP-A-59 126 431 (AGENCY OF INDUSTRIAL SCIENCES AND TECHNOLOGY) 21.07.1984**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Eckhardt, Volker Dr., Bodelschwinghstrasse 14, D-4150 Krefeld (DE)**
Erfinder: **Dicke, Hans-Rudolf Dr., Bodelschwinghstrasse 16, D-4150 Krefeld (DE)**
Erfinder: **Bottenbruch, Ludwig Dr., Wöhlerstrasse 5, D-4150 Krefeld (DE)**
Erfinder: **El Sayed, Aziz Dr., Saarlauternerstrasse 39, D-5090 Leverkusen (DE)**

**EP 0 221 302 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft hochmolekulare thermotrope vollaromatische Polyester mit sehr hoher Steifigkeit, hoher Zähigkeit sowie guter Verarbeitbarkeit, ein Verfahren zu ihrer Herstellung und ihre Verwendung zur Herstellung von Formkörpern, Filamenten, Fasern und Folien.

Als «thermotrop» bezeichnet man solche Substanzen, die flüssig-kristalline Schmelzen bilden. Thermotrope Polykondensate sind hinreichend bekannt, vgl. z.B.:

F.E. McFarlane et al., Liquid Crystal Polymers II, Contemporary Topics in Polymer Science, Vol. 2, Plenum Publishing Corporation 1977;

W.J. Jackson und H.F. Kuhfuss, J. Polymer Science, Polymer Chem. Ed. *14*, 2042 (1976);

W.C. Wooten et al., in A. Ciferri «Ultra-high Modulus Polymers», Applied Science Publ., London 1979, S. 362 f.;

A. Blumstein et al., «Liquid Crystalline Order in Polymers», Academic Press 1978;

J. Preston, Angew. Makromol. Chem. 109/110, S. 1-19 (1982);

A. Ciferri, W.R. Krigbaum, R.B. Meyer «Polymer Liquid Crystals», Academic Press, New York, 1982;

EP 1185, 1340, 8855, 11 640, 15 856, 17 310, 18 145, 19 709, 22 344, 44 205, 49 615;

US 3 991 013, 3 991 014, 4 066 620, 4 067 852, 4 083 829, 4 107 143, 4 226 970, 4 232 143, 4 232 144, 4 245 082, 4 269 965, 4 335 232, 4 381 389, 4 399 270, 4 398 015, 4 447 592, 4 500 699;

JP 59/126 431;

WO 79/797, 79/1030, 79/1040.

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Untersuchung der Polykondensate erfolgte nach dem Aufschmelzen der Proben bei Temperaturen zwischen 280 und 400°C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssig-kristallin eingestuft.

Die flüssig-kristallinen Polykondensate zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G.W. Gray und P.A. windsor, «Plastic Crystals, Physico-Chemical Properties and Methods of Investigation», insbesondere Chapter 3, John Wiley and Sons, New York, Sydney, Toronto 1974, beschrieben ist.

Formkörper, die aus flüssigkristalliner Schmelze hergestellt werden, weisen Steifigkeiten auf, wie sie normalerweise bei unverstärkten, aus isotroper Schmelze verarbeiteten Polykondensaten nicht gefunden werden; jedoch läßt die Zähigkeit solcher Formkörper manche Wünsche offen [vgl. US-PS 4 242 496, EP-A 44 175; W.J. Jackson jr., Brit. Polym. J. *12*, 154 (1980)]. Durch eigene Untersuchungen wurde bestätigt, daß thermotrope Polyester hoher Steifigkeit, d.h. hohen Elastizitätsmoduls, in der Regel geringere Zähigkeit und thermotrope Polyester hoher Zähigkeit in der Regel eine weniger ausgeprägte Steifigkeit besitzen.

Die US-PS 4 500 699 beschreibt unter anderem thermotrope Polyester aus Terephthalsäure, substituierten Hydrochinonen und 3,4'-Benzophenondicarbonsäure; in der JP 59 126 431 werden thermotrope Polyester aus Hydrochinon, 3,4'-Diphenyletherdicarbonsäure und 3,4'-Benzophenondicarbonsäure beansprucht. Die an diesen Polyestern gemessenen Werte für die Steifigkeit erscheinen nicht sehr hoch, wenn man berücksichtigt, daß die Messungen an dünnen Fasern vorgenommen wurden. Angaben zur Zähigkeit werden in beiden Fällen nicht gemacht.

Aufgabe der vorliegenden Erfindung war es daher, thermoplastisch leicht verarbeitbare thermotrope vollaromatische Polyester mit einer bisher nicht bekannten Kombination von sehr hoher Steifigkeit und hoher Zähigkeit zur Verfügung zu stellen.

Bevorzugte neue thermotrope vollaromatische Polyester sollten einen Zug-E-Modul von mindestens 15.000 MPa, vorzugsweise von mindestens 20.000 MPa und besonders bevorzugt von mindestens 25.000 MPa besitzen.

Die Schlagzähigkeit bevorzugter Polyester sollte mindestens 20, vorzugsweise mindestens 25 und besonders bevorzugt mindestens 30 kJ/m$^2$, die Kerbschlagzähigkeit mindestens 10, vorzugsweise mindestens 15, insbesondere mindestens 20 kJ/m$^2$ betragen.

Bevorzugte neue thermotrope vollaromatische Polyester sollten bei einer Temperatur unterhalb von 370°C, vorzugsweise unterhalb von 350°C, insbesondere unterhalb von 330°C thermoplastisch verarbeitbar sein.

Überraschenderweise wurde gefunden, daß vollaromatische Polyester, die einkondensierte Reste von p-Hydroxybenzoesäure, 3,4'-Benzophenondicarbonsäure und bestimmten Diphenolen enthalten, die gewünschte Kombination vorteilhafter Eigenschaften besitzen.

Gegenstand der vorliegenden Erfindung sind thermotrope vollaromatische Polyester mit einer inhärenten Viskosität von mindestens 0,5 dl/g und mit wiederkehrenden Einheiten der Formeln

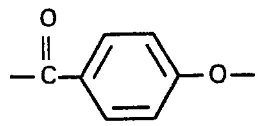
(I)

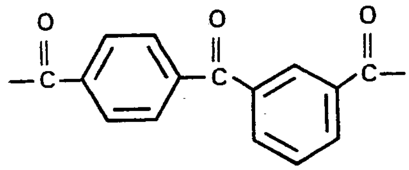
(II)

und -O-Ar-O- (III)

worin Ar zu 0 bis 90, vorzugsweise 50 bis 80 Mol-% aus 1,4-Phenylenresten und zu 100 bis 10, vorzugsweise 50 bis 20 Mol-% aus anderen 6 bis 18 C-Atomen enthaltenden bivalenten aromatischen Resten oder deren Mischungen, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatomen substituiert sein können, besteht,

mit der Maßgabe, daß das Molverhältnis I/II 0,66-4,0, vorzugsweise 1,0-3,0 und insbesondere 1,2-2,3

und

das Molverhältnis II/III 0,95-1,05, vorzugsweise 0,98-1,02 insbesondere 1,0 betragen.

Bei der Verwendung von Diphenolen, die Reste Ar enthalten, deren kettenverlängernde Bindungen gewinkelt sind oder die substituiert sind, wird man eine Menge nicht überschreiten, die die thermotropen Eigenschaften der resultierenden Polyester verlorengehen läßt.

Bevorzügte Diphenole, die zu Einheiten III führen, in denen Ar kein 1,4-Phenylenrest ist, sind beispielsweise 4,4'-Dihydroxyphenyl, 1,4-, 1,5-, 2,6- und 2,7-Naphthalindiol, Chlorhydrochinon, Methylhydrochinon, Phenylhydrochinon, Resorcin, Bisphenol-A, o,o,o',o'-Tetramethyl-, -chlor-, brombisphenol-A, 4,4'-Dihydroxydiphenylether, 4,4'-Dihydroxydiphenylsulfon, 4,4'-Dihydroxyphenylketon, 4,4'-Dyhydroxydiphenylsulfid sowie Mischungen der genannten Verbindungen. Besonders bevorzugt ist 4,4'-Dihydroxydiphenyl.

Die erfindungsgemäßen Polyester können bis zu 10 Mol-% Carbonatgruppen, bezogen auf die Summe von Ester- und Carbonatgruppen, enthalten, sind jedoch vorzugsweise frei von Carbonatgruppen.

Die erfindungsgemäßen Polyester können die Reste I in statistischer Verteilung, in Segmenten oder in Blöcken enthalten.

Als Endgruppen können die erfindungsgemäßen Polyester -COOH, -H, -OH, -$OC_6H_5$, Acyloxy oder von Kettenabbrechern herrührende Reste enthalten. Bevorzugte Kettenabbrecher sind monofunktionelle aromatische Hydroxylverbindungen, wie 4--Hydroxydiphenyl, p-Nonylphenol, 4-(1,1,3,3-Tetramethylbutyl)-phenol, β-Naphthol, und aromatische Monocarbonsäure, wie Diphenylcarbonsäuren und Naphthalincarbonsäure. Kettenabbrecher können in Mengen von 0,5-5 Mol-%, bei Carbonsäuren bezogen auf die Summe der Reste I und II, bei Phenolen bezogen auf die Reste I und III, eingesetzt werden.

Es können auch verzweigende drei- oder höherfunktionelle — vorzugsweise aromatische — Monomere in Mengen von 0,1-1 Mol-%, bezogen auf die Summe der Reste I, II und III, wie z.B. Phloroglucin, 1,3,5-Benzoltricarbonsäure und 3,5-Dihydroxybenzoesäure, eingesetzt werden.

Die erfindungsgemäßen Polyester besitzen eine inhärente Viskosität von mindestens 0,5, vorzugsweise von mindestens 1,0 dl/g (gemessen an einer Lösung von 5 mg Polyester/ml p-Chlorphenol bei 45°C). Sollten Polyester in p-Chlorphenol unlöslich sein, wird angenommen, daß sie die angegebene Mindestviskosität besitzen; sie sind somit erfindungsgemäß, sofern sie den Parametern des Hauptanspruchs genügen.

Die erfindungsgemäßen Polyester besitzen vorzugsweise eine Schmelzviskosität von weniger als 1000 Pa.s, gemessen bei einer Schergeschwindigkeit von $10^3$ s-1 unter Verwendung einer Düse mit einem Länge/Durchmesser-Verhältnis von 20 bei einer Temperatur von weniger als 370°C.

Die erfindungegemäßen Polyester können nach verschiedenen Verfahren hergestellt werden, z.B. durch Kondensation bzw. Umesterung der von den Resten I, II und III, abgeleiteten Hydroxycarbonsäuren, Dicarbonsäuren und Diphenolen oder ihrer reaktionsfähigen Derivate und anschließende Polykondensation.

Beispiele für bevorzugte Ausgangsverbindungen sind ihre Arylester, ihre Acylester und ihre Säurechloride.

Nach einem bevorzugten Syntheseverfahren werden die Arylester, vorzugsweise die Phenylester, der von den Resten I und II abgeleiteten Carbonsäuren mit den von den Resten III abgeleiteten Diphenolen umgesetzt, wobei die Phenylester auch in situ hergestellt werden können.

Die Reste I, II und III werden im Verhältnis der Ausgangskomponenten in den Polyester eingebaut.

Es kann zweckmäßig sein, sowohl die Kondensations- bzw. Umesterungsreaktion als auch die Polykondensationsreaktionen katalytisch zu beschleunigen. Derartige Katalysatoren sind bekanntlich z.B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titan-

alkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutyl-zinndiacetat, Dibutyl-dimethoxy-zinn.

Die Katalysatormengen betragen vorzugsweise 0,001-1, insbesondere 0,01-0,2 Gew.-%, bezogen auf das Gesamtgewicht der eingesetzten Monomeren.

Die erfindungsgemäßen Polyester können bei Temperaturen von 150 bis 380°c hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck auf ca. 0,1 mbar gesenkt wird.

Das erhaltene Produkt kann — vorzugsweise in Granulatform — einer Festphasennachkondensation unter vermindertem Druck bei Temperaturen von 200 bis 300°C unterworfen werden; nach 1 bis 25 Stunden haben sich das Molekulargewicht erhöht und die daraus resultierenden Eigenschaften des Polyesters merklich verbessert.

Weiterer Gegenstand der Erfindung ist also ein Verfahren zur herstellung der neuen Polyester durch Umsetzung der von den Resten I, II und III abgeleiteten Hydroxycarbonsäuren, Dicarbonsäuren und Diphenole bzw. ihrer reaktiven Derivate, die auch in situ hergestellt werden können, gegebenenfalls in Gegenwart von Katalysatoren, Kettenabbrechern und Verzweigungsmitteln, bei Temperaturen von 150 bis 380°C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile ausgezeichneter Steifigkeit und Zähigkeit, guter Wärmeformbeständigkeit und großer Dimensionsstabilität hergestellt werden. Da die Polyester außerordentlich chemikalienresistent und flammwidrig sind, eignen sie sich bevorzugt zur Herstellung von

— elektrotechnischen Artikeln, wie z.B. Isolatoren, gedruckten Schaltungen, Steckkontakten, Armaturenteilen,

— Teilen chemisch-technischer Apparate, wie z.B. Rohren, Behälterauskleidungen, Rotoren, Gleitlagern, Dichtungen,

— Teilen der Flugzeuginnenausstattung,

— Teilen medizinisch-technischer Geräte, wie z.B. Bauteilen von Klimaanlagen, Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5-65 Gew.-%, bezogen auf verstärkte bzw. gefüllte Formmassen, sind sie bestens geeignet.

Weiterer Gegenstand der Erfindung ist also die Verwendung der neuen Polyester zur Herstellung von Formkörpern, Filamenten, Fasern und Folien.

*Beispiele*

Die Prüfung der Schlagzähigkeit $a_n$ und Kerbschlagzähigkeit $a_k$ erfolgte an Normalkleinstäben gemäß DIN 53 453 (ISO/R 179) bei 23°C jeweils an 10 Prüfkörpern. Die Bestimmung der Biegefestigkeit wurde an Normalkleinstäben gemäß DIN 53 452 (ISO R 178) durchgeführt. Zug-E-Modul und Biege-E-Modul wurden gemäß DIN 53 457 ermittelt. Die Messung der Wärmeformbeständigkeit erfolgte durch Bestimmung der Vicat-B-Erweichungstemperatur gemäß DIN 53 460 (ISO 306).

*Beispiel 1*

In ein mit Stickstoff gespültes und ausgeheiztes 1-1-Planschliffgefäß mit Planschliffdeckel, Rührer, Stickstoffeinleitung und Destillationsaufsatz wurden folgende Substanzen eingewogen:

0,60 Mol = 128,5 g p-Hydroxybenzoesäurephenylester,
0,40 Mol = 169,0 g 3,4'-Benzophenondicarbonsäurediphenylester,
0,20 Mol = 22,0 g Hydrochinon,
0,20 Mol = 37,2 g 4,4'-Dihydroxydiphenyl und
0,2 g = Titantetraisopropylatlösung in Chlorbenzol (1 gew.-%ig).

Unter leichtem Stickstoffstrom wurde die Reaktionsmischung mittels Salzbad bei 250°C aufgeschmolzen. Über einen Zeitraum von 2,5 Stunden wurde durch stufenweise Erhöhung der Temperatur bis auf 360°C Phenol abdestilliert. Die zunächst klare Schmelze trübe sich hierbei ein.

Zur Vervollständigung des Umsatzes wurde anschließend während 1,5 Stunden der Druck in mehreren Stufen bis auf ca. 1 mbar abgesenkt.

Das hellgraue Reaktionsprodukt mit einer inhärenten Viskosität von 2,7 dl/g wurde gemahlen und bei 240°C einer Festphasennachkondensation unterworfen (15 Stunden bei einem Druck von 1 mbar). Der so erhaltene Polyester war in p-Chlorphenol unlöslich und wies im Bereich von 310-400°C eine optisch anisotrope Schmelzphase auf.

*Beispiele 2-9*

Zur Herstellung der in Tabelle 1 aufgelisteten Polyester wurde die in Beispiel 1 beschriebene Reaktionsapparatur und das dort beschriebene Verfahren verwendet.

TABELLE 1

| Bsp. | PHB (Mol-%) | 3,4'-BDC (Mol-%) | Hy (Mol-%) | DOD (Mol-%) | 2,6-ND (Mol-%) | RES (Mol-%) | inhärente Viskosität * (dl/g) | anisotrope Phase (°C) |
|---|---|---|---|---|---|---|---|---|
| 2 | 55 | 45 | 22,5 | 22,5 | — | — | 1,62 | 315-400 |
| 3 | 65 | 35 | 17,5 | 17,5 | — | — | 1,45 | 285-400 |
| 4 | 70 | 30 | 15 | 15 | — | — | 1,34 | 315-400 |
| 5 | 60 | 40 | 24 | 16 | — | — | 1,93 | 320-400 |
| 6 | 60 | 40 | 28 | 12 | — | — | 1,47 | 330-400 |
| 7 | 60 | 40 | 32 | 8 | — | — | 1,27 | 350-400 |
| 8 | 60 | 40 | 20 | — | 20 | — | 1,15 | 300-400 |
| 9 | 60 | 40 | 30 | — | — | 10 | 0,82 | 340-400 |

PHB = p-Hydroxybenzoesäure
3,4'-BDC = 3,4'-Benzophenondicarbonsäure
Hy = Hydrochinon
DOD = 4,4'-Dihydroxydiphenyl
2,6-ND = 2,6-Naphthalindiol
RES = Resorcin
* vor der Festphasennachkondensation (alle nachkondensierten Produkte waren schlecht löslich)

Zur Prüfung der mechanischen Eigenschaften wurden aus den Polyestern der Beispiele 1-9 durch Spritzguß Normkleinstäbe und Zugstäbe hergestellt.

Die Verarbeitung der Polyester erfolgte bei Temperaturen zwischen 300 und 370°C. In Tabelle 2 sind die gemessenen Werte aufgeführt.

TABELLE 2

| Beispiel | Biege-E-Modul (MPa) | Biegefestigkeit (MPa) | Zug-E-Modul (MPa) | $a_n/a_k$ (kJ/M²) | Vicat-B-Temperatur (°C) |
|---|---|---|---|---|---|
| 1 | 16300 | 243 | 28200 | 44/24 | 160 |
| 2 | 11500 | 207 | 34100 | 49/32 | 155 |
| 3 | 15500 | 227 | 26100 | 35/19 | 173 |
| 4 | 11800 | 170 | 18900 | 29/16 | 181 |
| 5 | 17100 | 210 | 27600 | 39/25 | 169 |
| 6 | 14700 | 198 | 23200 | 35/19 | 175 |
| 7 | 10500 | 165 | 21100 | 21/14 | 184 |
| 8 | 13700 | 207 | 22300 | 32/27 | 165 |
| 9 | 9700 | 153 | 16700 | 26/12 | 161 |

**Patentansprüche**

1. Thermotrope vollaromatische Polyester mit einer inhärenten Viskosität von mindestens 0,5 dl/g und mit wiederkehrenden Einheiten der Formeln

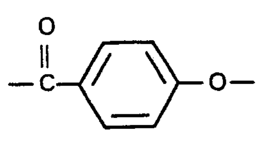
(I)

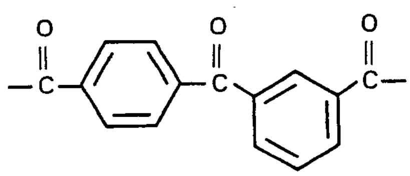
(II)

und -O-Ar-O- (III)

worin

Ar zu 0 bis 90 Mol-% aus 1,4-Phenylenresten und zu 100 bis 10 Mol-% aus anderen 6 bis 18 C-Atome enthaltenden bivalenten aromatischen Resten oder deren Mischungen, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, besteht,

mit der Maßgabe, daß das Molverhältnis I/II 0,66-40 und

das Molverhältnis II/III 0,95 bis 1,05 betragen.

2. Polyester nach Anspruch 1, dadurch gekennzeichnet, daß das Molverhältnis I/II 1,0-3,0 beträgt.

3. Polyester nach Ansprüchen 1 und 2, dadurch gekennzeichnet, daß das Molverhältnis I/II 1,2-2,4 beträgt.

4. Polyester nach Ansprüchen 1-3, dadurch gekennzeichnet, daß Ar zu 50 bis 80 Mol-% aus einem 1,4-Phenylenrest und zu 50 bis 20 Mol-% aus anderen 6 bis 18 C-Atomen enthaltenden bivalenten aromatischen Resten oder deren Mischungen, deren kettenverlängernde Bindungen zu 50 bis 100 Mol-% coaxial oder parallel entgegengesetzt und zu 50 bis 0 Mol-% gewinkelt sind und die durch $C_1$-$C_4$-Alkoxygruppen oder Halogenatome substituiert sein können, besteht.

5. Polyester gemäß Ansprüchen 1-4, dadurch gekennzeichnet, daß Ar aus einer Mischung von 1,4-Phenylenresten und 4,4'-Biphenylenresten besteht.

6. Polyester gemäß Ansprüchen 1-5, dadurch gekennzeichnet, daß Ar aus einer Mischung von 1,4-Phenylenresten und 4,4'-Biphenylenresten in Molverhältnissen von 2/1 bis 1/2 besteht.

7. Verfahren zur Herstellung der Polyester nach Ansprüchen 1-6 durch Umsetzung der Hydroxycarbonsäuren, Dicarbonsäuren und Diphenole mit den Resten I-III bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 150-380°C, gegebenenfalls unter vermindertem Druck.

8. Verfahren nach Anspruch 7, dadurch gekennzeichnet, daß sich eine Festphasennachkondensation anschließt.

9. Verwendung der Polyester nach Ansprüchen 1-6 zur Herstellung von Formkörpern, Filamenten, Fasern und Folien.

## Claims

1. Thermotropic, fully aromatic polyesters having an intrinsic viscosity of at least 0.5 dl/g and containing recurring units corresponding to the following formulae

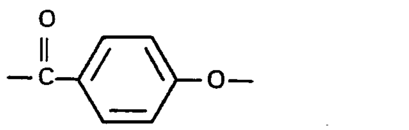

(I)

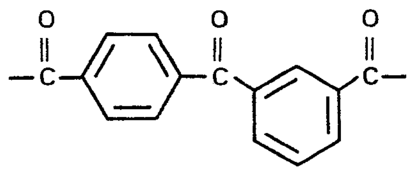

(II)

and -O-Ar-O- (III)

in which

from 0 to 90 mol-% Ar consists of 1,4-phenylene groups and 100 to 10 mol-% of other $C_{6-18}$ bivalent aromatic groups or mixtures thereof, in which from 50 to 100 mol-% of the chain-extending bonds are coaxially opposed or parallel opposed and 50 to 0 mol-% are angled and which may be substituted by $C_{1-4}$ alkoxy groups or halogen atoms,

with the proviso that the molar ration of I to II is from 0.66 to 40 and the molar ratio of II to III is from 0.95 to 1.05.

2. Polyesters as claimed in claim 1, characterized in that the molar ratio of I to II is from 1.0 to 3.0.

3. Polyesters as claimed in claims 1 and 2, characterized in that the molar ratio of I to II is from 1.2 to 2.4.

4. Polyesters as claimed in claims 1 to 3, characterized in that from 50 to 80 mol-% of Ar consists of a 1,4-phenylene group and from 50 to 20 mol-% of other $C_{6-18}$ bivalent aromatic groups or mixtures thereof, in which from 50 to 100 mol-% of the chain-extending bonds are coaxially opposed or parallel-opposed and from 50 to 0 mol-% are angled and which may be substituted by $C_{1-4}$ alkoxy groups or halogen atoms.

5. Polyesters as claimed in claims 1 to 4, characterized in that Ar consists of a mixture of 1,4-phenylene groups and 4,4'-biphenylene groups.

6. Polyesters as claimed in claims 1 to 5, characterized in that Ar consists of a mixture of 1,4-phenylene groups and 4,4'-byphenylene groups in molar ratio of from 2 : 1 to 1 : 2.

7. A process for the production of the polyesters claimed in claims 1 to 6 by reaction of the hydroxycarboxylic acids, dicarboxylic acids and diphenols containing the groups I to III or reactive derivatives thereof, which may even be prepared *in situ*, optionally in the presence of chain terminators, branching agents and catalysts, at temperatures in the range from 150 to 380°C and optionally under reduced pressure.

8. A process as claimed in claim 7, characterized in that the reaction is followed by solid-phase post-condensation.

9. The use of the polyesters claimed in claims 1 to 6 for the production of moldings, filaments, fibers and films.

## Revendications

1. Polyesters thermotropes entièrement aromatiques ayant une viscosité intrinsèque d'au moins 0,5 dl/g et présentant des motifs récurrents de formules

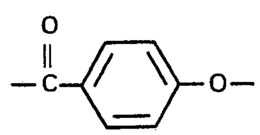

(I)

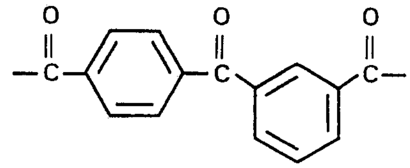

(II)

et -O-Ar-O- (III)

dans lesquelles

Ar est constitué en proportion de 0 à 90 moles % de restes 1,4-phénylène et en proportion de 100 à 10 moles % d'autres restes aromatiques bivalents contenant 6 à 18 atomes de carbone ou leurs mélanges, dont les liaisons d'allongement de chaîne sont opposées coaxialement ou parallèlement en proportion de 50 à 100 moles % et sont angulaires en proportion de 50 à 0 moles % et qui peuvent être substitués par des groupes alkoxy en $C_1$ à $C_4$ ou par des atomes d'halogènes,

sous réserve que le rapport molaire I/II ait une valeur de 0,66 à 40

et que

le rapport molaire II/III ait une valeur de 0,95 à 1,05.

2. Polyesters suivant la revendication 1, caractérisés en ce que le rapport molaire I/II a une valeur de 1,0 à 3,0.

3. Polyesters suivant les revendications 1 et 2, caractérisés en ce que le rapport molaire I/II a une valeur de 1,2 à 2,4.

4. Polyesters suivant les revendications 1 à 3, caractérisés en ce que Ar est constitué en proportion de 50 à 80 moles % d'un reste 1,4-phénylène et en proportion de 50 à 20 moles % d'autres restes aromatiques bivalents contenant 6 à 18 atomes de carbone, ou leurs mélanges, dont les liaisons d'allongement de chaîne sont opposées coaxialement ou parallèlement en proportion de 50 à 100 moles % et sont angulaires en proportion de 50 à 0 moles % et qui peuvent être substitués par des groupes alkoxy en $C_1$ à $C_4$ ou des atomes d'halogènes.

5. Polyesters suivant les revendications 1 à 4, caractérisés en ce que Ar est constitué d'un mélange de restes 1,4-phénylène et de restes 4,4'-biphénylène.

6. Polyesters suivant les revendications 1 à 5, caractérisés en ce que Ar est constitué d'un mélange de restes 1,4-phénylène et de restes 4,4'-biphénylène dans des rapports molaires de 2/1 à 1/2.

7. Procédé de production des polyesters suivant les revendications 1 à 6 par réaction des acides hydroxycarboxyliques, des acides dicarboxyliques et des diphénols avec les restes I - III ou de leurs dérivés réactifs, qui peuvent également être préparés in situ, éventuellement en présence d'agents de terminaison de chaîne, d'agents de ramification et de catalyseurs, à des températures de 150 à 380°C, éventuellement sous pression réduite.

8. Procédé suivant la revendication 7, caractérisé en ce qu'on effectue ensuite une post-condensation en phase solide.

9. Utilisation des polyesters suivant les revendications 1 à 6 pour la production de pièces moulées, de filaments, de fibres et de feuilles.